# FASCICULE DE BREVET EUROPEEN

(11) **EP 3 066 739 B1**
(45) Date de publication et mention de la délivrance du brevet: **09.01.2019**
(21) Numéro de dépôt: 14798756.4
(22) Date de dépôt: 06.11.2014
(51) Int. Cl.: H02J 7/00, B60L 11/18, H02M 3/335

(54) **PROCÉDÉ DE CHARGE DE VÉHICULE ÉLECTRIQUE À VÉHICULE ÉLECTRIQUE**
VERFAHREN ZUM LADEN VON EINEM ELEKTROFAHRZEUG ZU EINEM ELEKTROFAHRZEUG
METHOD OF CHARGING FROM ELECTRIC VEHICLE TO ELECTRIC VEHICLE

(30) Priorité: 08.11.2013 FR 1360940
(43) Date de publication de la demande: 14.09.2016
(73) Titulaire: Intelligent Electronic Systems, 34130 Saint-Aunes (FR)
(72) Inventeur: BIAGINI, Eric, 34470 Perols (FR); COSTE, François, 34090 Montpellier (FR); JEAN, Guillaume, 34300 Grau d'Agde (FR)
(74) Mandataire: Bandpay & Greuter
(86) Numéro de dépôt international: PCT/EP2014/073929
(87) Numéro de publication internationale: WO 2015/067694

(56) Documents cités:
- EP-A2- 2 660 950
- FR-A1- 2 978 303
- JP-A- 2007 267 561

## Description

### DOMAINE DE L'INVENTION

La présente invention concerne un procédé de charge de véhicule électrique à véhicule électrique, ainsi qu'un dispositif de charge permettant la mise en oeuvre de ce procédé.

### ARRIERE-PLAN TECHNIQUE

De nombreux véhicules utilisent l'énergie électrique et sont équipés de batteries, par exemple des véhicules automobiles électriques, mais également des nacelles, des transpalettes...

L'alimentation des batteries de ces véhicules est effectuée en courant continu. A cet, effet, il est connu d'utiliser des dispositifs de charge permettant de convertir le courant alternatif issu du réseau de distribution électrique en courant continu approprié pour la charge de batterie.

On connaît deux types de dispositifs de charge : d'une part les chargeurs embarqués, qui sont montés directement sur les véhicules électriques ; et d'autre part les chargeurs externes, intégrés dans des bornes de charge fixes (par exemple en atelier, parking, garage, ou sur la voirie). Par ailleurs, il existe des chargeurs externes montés sur des chariots mobiles, généralement encombrants et de masse élevée.

Toutefois, les véhicules électriques présentent des risques d'immobilisation, par exemple du fait de l'autonomie limitée des batteries ou en cas de défaillance de chargeur embarqué ou de chargeur externe. En outre, les véhicules électriques peuvent ne pas être équipés de chargeur embarqué, en particulier dans le cas d'une utilisation où la charge de batterie peut être systématiquement réalisée avec un chargeur externe fixe dans une station de recharge par exemple.

Il existe donc un besoin d'améliorer la sécurité d'utilisation des véhicules électriques et notamment d'éviter les risques d'immobilisation par déchargement excessif des batteries. FR2978303 divulgue un dispositif de charge adapté à être connecté entre une batterie d'un premier véhicule électrique et une batterie d'un deuxième véhicule électrique, pour alimenter la deuxième batterie à partir de la première batterie, selon le préambule de la revendication 1.

### RESUME DE L'INVENTION

L'invention concerne en premier lieu un dispositif de charge adapté à être connecté d'une part à une batterie d'un premier véhicule électrique, et d'autre part à une batterie d'un deuxième véhicule électrique, à être alimenté en courant d'entrée continu par la batterie du premier véhicule électrique et à alimenter la batterie du deuxième véhicule électrique avec un courant de sortie continu.

Selon un mode de réalisation, le courant d'entrée et le courant de sortie sont différents, le dispositif de charge étant adapté à convertir le courant d'entrée en courant de sortie.

Selon un mode de réalisation, le dispositif de charge est intégré dans le premier véhicule électrique, ou est intégré dans le deuxième véhicule électrique.

Selon un mode de réalisation, le dispositif de charge est un dispositif de charge amovible et portable.

Selon un mode de réalisation, le dispositif de charge est également adapté à être connecté d'une part à une source de courant alternatif et d'autre part à une batterie d'un véhicule électrique, à être alimenté par un courant d'entrée issu de la source de courant alternatif, à convertir le courant d'entrée en un courant de sortie continu, et à alimenter la batterie du véhicule électrique avec ledit courant de sortie continu.

Selon un mode de réalisation, le dispositif de charge comprend un premier étage assurant la conversion du courant d'entrée en courant intermédiaire continu ainsi qu'un deuxième étage assurant la conversion du courant intermédiaire en courant de sortie.

Selon un mode de réalisation, le dispositif de charge comporte un système de contrôle adapté à ajuster les paramètres de l'alimentation de la batterie du deuxième véhicule, de préférence à ajuster les paramètres de la conversion du courant d'entrée en courant de sortie ; et adapté à échanger des informations et instructions avec le premier véhicule et/ou avec le deuxième véhicule et/ou le cas échéant avec la source de courant alternatif.

Selon un mode de réalisation, le système de contrôle est pourvu de moyens d'alimentation auxiliaire, choisis de préférence parmi une batterie auxiliaire et un convertisseur auxiliaire adapté à recevoir un courant externe continu ou alternatif et à le convertir en courant continu d'alimentation du système de contrôle.

Selon un mode de réalisation, le véhicule électrique est une automobile électrique.

L'invention concerne également un procédé de charge d'une batterie de véhicule électrique, comprenant :
- la connexion d'un dispositif de charge à une batterie d'un premier véhicule et / ou à une batterie d'un deuxième véhicule ;
- l'alimentation du dispositif de charge par un courant d'entrée continu issu de la batterie du premier véhicule ;
- l'alimentation de la batterie du deuxième véhicule par un courant de sortie issu du dispositif de charge.

Selon un mode de réalisation, le procédé comprend :
- la conversion du courant d'entrée en courant de sortie continu par le dispositif de charge.

Selon un mode de réalisation, le dispositif de charge est intégré dans le premier véhicule, et l'étape de connexion consiste à relier le dispositif de charge au deuxième véhicule, de préférence au moyen d'un câble électrique ; ou le dispositif de charge est intégré dans le deuxième véhicule, et l'étape de connexion consiste à relier le dispositif de charge au premier véhicule, de préférence au moyen d'un câble électrique.

Selon un mode de réalisation, le dispositif de charge est un dispositif amovible, et l'étape de connexion consiste à relier le dispositif de charge au premier véhicule et au deuxième véhicule.

Selon un mode de réalisation, le courant de sortie présente une tension de 200 à 550 V ; et/ou le courant de sortie présente une puissance inférieure ou égale à 20 kW, de préférence inférieure ou égale à 10 kW ou à 6 kW.

Selon un mode de réalisation, le procédé comporte l'ajustement de paramètres de l'alimentation de la batterie du deuxième véhicule et l'échange d'informations et d'instructions entre le dispositif de charge et le premier véhicule et/ou le deuxième véhicule ; le procédé comprenant de préférence l'envoi d'une instruction du dispositif de charge au premier véhicule pour déclencher l'alimentation du dispositif de charge par la batterie du premier véhicule.

Selon un mode de réalisation, le procédé comprend une étape préliminaire d'alimentation du dispositif de charge par une source d'alimentation auxiliaire, de préférence choisie parmi une batterie auxiliaire et un courant externe continu ou alternatif.

Selon un mode de réalisation, le véhicule électrique est une automobile électrique.

La présente invention permet de surmonter les inconvénients de l'état de la technique. Elle permet plus particulièrement d'améliorer la sécurité d'utilisation des véhicules électriques et notamment d'éviter les risques d'immobilisation des véhicules.

Cela est accompli grâce à la mise au point d'un dispositif de charge permettant de charger une batterie de véhicule électrique à partir de la batterie d'un autre véhicule électrique, ce dispositif constituant ainsi un véritable chargeur de secours permettant de recharger une batterie de véhicule électrique en cas de panne.

### BREVE DESCRIPTION DES FIGURES

La **figure 1** est un schéma montrant le fonctionnement d'un dispositif de charge selon l'invention, dans un premier mode de fonctionnement.
La **figure 2** est un schéma montrant le fonctionnement d'un dispositif de charge selon l'invention, dans un deuxième mode de fonctionnement.
La **figure 3** est un exemple de schéma électrique général du circuit électrique du dispositif de charge selon l'invention.

### DESCRIPTION DE MODES DE REALISATION DE L'INVENTION

L'invention est maintenant décrite plus en détail et de façon non limitative dans la description qui suit.

L'invention propose un dispositif de charge adapté pour alimenter une batterie de véhicule électrique. Par véhicule électrique on entend un appareil motorisé susceptible de déplacer ou transporter des personnes ou du matériel, dont le moteur est alimenté en énergie électrique par une batterie motrice.

Le véhicule électrique est de préférence une automobile électrique. Alternativement, il peut s'agir par exemple d'un engin de manutention tel qu'un chariot élévateur, une nacelle élévatrice, un transpalette.

Selon un mode de réalisation, il s'agit d'un dispositif de charge amovible et portable. Par « *portable* » ou « *transportable* » ou entend que le dispositif peut être soulevé et déplacé par un adulte seul en bonne santé, sans l'aide d'un quelconque appareillage spécialisé. Le dispositif n'est pas intégré de façon permanente sur une structure fixe telle qu'une borne de charge pour véhicule électrique. Le dispositif n'est pas non plus intégré de façon permanente au véhicule électrique, c'est-à-dire qu'il ne s'agit pas d'un chargeur embarqué.

A titre d'illustration, le dispositif peut avoir une masse inférieure ou égale à 20 kg, de préférence inférieure ou égale à 15 kg, ou à 10 kg, ou à 7,5 kg, ou à 5 kg.

A titre d'illustration, le dispositif peut présenter une dimension maximale inférieure ou égale à 60 cm, de préférence inférieure ou égale à 50 cm, ou à 40 cm, ou à 30 cm.

Le dispositif peut être intégré dans un boîtier, le cas échéant pourvu de câbles électriques appropriés.

Alternativement, le dispositif peut être embarqué, c'est-à-dire intégré de manière fixe dans un véhicule électrique (soit le véhicule donneur de courant, soit le véhicule receveur de courant, soit un véhicule qui peut être à la fois donneur de courant et receveur de courant selon le mode de fonctionnement du dispositif). Il peut en particulier être connecté de manière permanente à la batterie du véhicule dans lequel il est intégré.

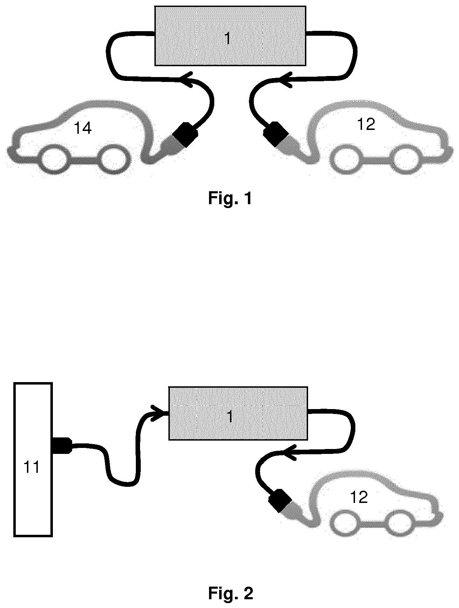

Selon un premier mode de fonctionnement, qui est illustré à la **figure 1****,** le dispositif de charge 1 est connecté à une batterie d'un premier véhicule électrique 14 et à une batterie d'un deuxième véhicule électrique 12, au moyen le cas échéant de câbles appropriés.

La batterie du premier véhicule électrique 14 constitue une source de courant : elle alimente le dispositif de charge 1 en un courant d'entrée, qui dans ce mode de fonctionnement est continu. Et le dispositif de charge 1 alimente la batterie du deuxième véhicule électrique 12 par un courant de sortie, qui est également continu.

Selon un mode de réalisation, le dispositif de charge 1 n'opère aucune conversion, par exemple dans le cas où l'un au moins des véhicules est pourvu d'un dispositif de charge réversible capable de fournir un transfert de courant maîtrisé depuis la batterie d'un véhicule vers la batterie de l'autre véhicule. Dans un tel cas, le dispositif de charge 1 peut se limiter à un simple dispositif de raccordement et de gestion de protocoles entre les deux véhicules électriques : il peut alors simplement être intégré dans un câble de liaison entre les véhicules électriques.

Alternativement, et de manière préférée, le courant d'entrée est différent du courant de sortie, et le dispositif de charge 1 opère donc une conversion DC-DC.

Etant donné que la tension à laquelle une batterie de véhicule électrique se charge (ou se décharge) varie selon son niveau de charge, un tel mode de réalisation est particulièrement avantageux.

Ainsi, le dispositif de charge 1 peut agir selon les cas comme un élévateur ou un abaisseur de tension.

Selon un mode de réalisation, le dispositif de charge 1 comprend une isolation galvanique entre l'entrée et la sortie.

Selon un mode de réalisation alternatif, le dispositif de charge 1 est dépourvu d'isolation galvanique entre l'entrée et la sortie.

Le courant d'entrée délivré, dans ce mode de fonctionnement, peut avoir par exemple une tension de 20 à 1500 V, de préférence de 50 à 550 V, de manière plus particulièrement préférée de 200 à 550 V, et tout particulièrement de 300 à 500 V.

Dans un deuxième mode de fonctionnement, illustré à la **figure 2****,** le dispositif de charge 1 est connecté d'une part à une source de courant alternatif 11 et d'autre part, en sortie, à une batterie de véhicule électrique 12, au moyen le cas échéant de câbles appropriés.

La source de courant alternatif 11 peut être par exemple le réseau de distribution électrique général. Elle alimente le dispositif de charge 1 en courant d'entrée alternatif, de préférence un courant monophasé (et alternativement éventuellement un courant multiphasé, notamment triphasé). Si le courant d'entrée est monophasé, il peut avoir par exemple une tension de 85 à 265 V (par exemple 110 ou 230 V).

Dans un troisième mode de fonctionnement, le dispositif de charge 1 est connecté d'une part à une source de courant continu (qui peut être par exemple une batterie externe fixe, ou une batterie externe sur un chariot mobile, ou une batterie externe embarquée sur un engin de dépannage) et d'autre part, en sortie, à une batterie de véhicule électrique, au moyen le cas échéant de câbles appropriés.

Le courant d'entrée délivré, dans ce troisième mode de fonctionnement, peut avoir par exemple une tension de 20 à 1500 V, de préférence de 50 à 550 V, de manière plus particulièrement préférée de 200 à 550 V, et tout particulièrement de 300 à 500 V.

Selon un mode de réalisation, le dispositif de charge est adapté à fonctionner selon le premier mode de fonctionnement seulement.

Selon un mode de réalisation, le dispositif de charge est adapté à fonctionner à la fois selon le premier mode et selon le deuxième mode de fonctionnement.

Selon un mode de réalisation, le dispositif de charge est adapté à fonctionner à la fois selon le premier mode et selon le troisième mode de fonctionnement.

Selon un mode de réalisation, le dispositif de charge est adapté à fonctionner à la fois selon le premier mode, le deuxième mode et le troisième mode de fonctionnement.

Dans chaque mode de fonctionnement, le courant de sortie délivré est un courant continu approprié pour la charge d'une batterie de véhicule électrique, c'est-à-dire ayant une tension de 20 à 1500 V, de préférence de 50 à 550 V, de manière plus particulièrement préférée de 200 à 550 V, et tout particulièrement de 300 à 500 V.

Dans le deuxième mode de fonctionnement, le dispositif de charge 1 opère une conversion AC-DC.

Selon un mode de réalisation, le dispositif de charge 1 assure une conversion du courant d'entrée en courant intermédiaire (continu) puis une conversion du courant intermédiaire en courant de sortie. De préférence la conversion du courant intermédiaire en courant de sortie est effectuée au moyen d'un transformateur muni de part et d'autre de modules de conversion à découpage.

De préférence, le dispositif de charge 1 comprend des moyens d'échange d'informations et d'instructions avec la source de courant (ou avec les différentes sources de courant possibles) et avec le véhicule électrique devant être chargé (par exemple avec la batterie de celui-ci) ; ainsi que des moyens d'ajustement des paramètres de la conversion du courant d'entrée en courant de sortie, notamment en fonction d'informations reçues de la source de courant et/ou d'informations reçus de la batterie du véhicule électrique à charger et/ou d'instructions données par l'utilisateur. L'ensemble de ces moyens permet une gestion complète du protocole de charge.

L'interface du dispositif de charge 1 peut ainsi être compatible avec la norme EN61851, en modes 1 et/ou 2 et/ou 3, et/ou compatible avec la norme Chademo et/ou compatible avec la norme ISO 15118 et/ou compatible avec la norme J1772 et/ou toute autre norme définissant un protocole et un système de communication entre le dispositif de charge, la source de courant et le véhicule.

Selon un mode de réalisation, le dispositif de charge 1 fonctionne selon l'une ou l'autre norme selon le véhicule à charger et la source de courant.

Les moyens d'échange d'informations et d'instructions avec la source de courant peuvent notamment être aptes à déclencher la fourniture de courant d'entrée par la source de courant (notamment par la batterie du premier véhicule, pour ce qui est du premier mode de fonctionnement), dans le cadre d'un fonctionnement sécurisé.

Les moyens d'échange d'informations et d'instructions avec la source de courant peuvent également être aptes à éviter une décharge excessive de celle-ci, lorsqu'il s'agit d'une batterie de véhicule (premier mode de fonctionnement) voire d'une batterie externe (troisième mode de fonctionnement).

Selon un mode de réalisation, le dispositif de charge 1 est réversible, c'est-à-dire qu'il est susceptible de restituer de l'énergie depuis la batterie du véhicule électrique 12 vers la source de courant, et plus particulièrement vers la source de courant alternatif 11.

Selon un mode de réalisation, le véhicule électrique dont la batterie est chargée au moyen du dispositif de charge selon l'invention est un véhicule électrique dépourvu de chargeur embarqué (c'est-à-dire de dispositif assurant une conversion de courant électrique alternatif en courant continu propre à alimenter la batterie).

Selon un mode de réalisation, le dispositif de charge 1 comporte des moyens d'alimentation auxiliaire. Ces moyens d'alimentation sont notamment utiles pour permettre l'échange d'informations et d'instructions avec la source de courant et avec la batterie à charger dans une phase préliminaire, permettant de déclencher la fourniture de courant par la source de courant.

Ces moyens d'alimentation auxiliaire peuvent comprendre une batterie auxiliaire (ou une ou plusieurs piles électriques) dans le dispositif de charge 1 lui-même. Alternativement, on peut prévoir un convertisseur auxiliaire adapté à être alimenté en courant externe et à le convertir en courant continu adapté pour le fonctionnement du dispositif de charge 1 notamment pendant la phase préliminaire susmentionnée.

On peut notamment prévoir d'alimenter ce convertisseur auxiliaire avec un courant alternatif issu du réseau de distribution électrique. On peut également prévoir de l'alimenter avec une batterie externe, ou encore avec le réseau électrique de bord qui alimente les équipements d'un véhicule électrique (soit le véhicule cible qui est chargé, soit le cas échéant le véhicule qui est utilisé comme source de courant).

Ces moyens d'alimentation auxiliaire sont particulièrement utiles lorsqu'aucun des deux véhicules ne présente de source d'alimentation disponible au niveau de son connecteur de charge. En effet, pour des raisons de sécurité, l'accès direct à des tensions dangereuses au niveau des connecteurs de charge des véhicules n'est pas autorisé sans que soit avérée la présence d'un connecteur externe adapté, et sans que par un moyen sûr de contrôle, ce connecteur soit identifié par le véhicule et son système de supervision comme étant un connecteur de chargeur externe adapté.

Cette identification est effectuée par un échange de signaux entre le véhicule et le connecteur externe qui lui est raccordé. Il est donc nécessaire de disposer d'une alimentation préalable, pour être en capacité d'établir l'échange de signaux afin de déclencher le raccordement des contacts électriques permettant d'une part de disposer d'une source de courant issue d'un véhicule, et d'autre part d'alimenter la charge de l'autre véhicule.

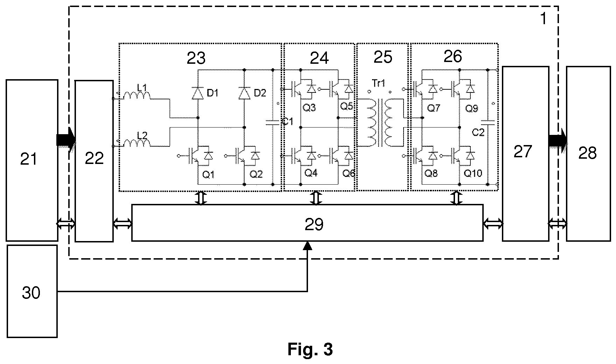

En faisant référence à la **figure 3****,** un circuit électrique possible pour le dispositif de charge 1 selon l'invention est décrit plus en détail.

Dans cet exemple, le dispositif de charge 1 comprend une interface d'entrée 22 qui échange des informations et instructions avec une source de courant 21 et peut être alimentée en courant électrique par cette source de courant 21 ou au contraire (en mode de redistribution) fournir du courant électrique à celle-ci.

Dans le premier mode de fonctionnement qui a été décrit ci-dessus, la source de courant 21 est une batterie de véhicule électrique. Dans le deuxième mode de fonctionnement qui a été décrit ci-dessus, la source de courant 21 est une source de courant alternatif. Dans le troisième mode de fonctionnement qui a été décrit ci-dessus, la source de courant 21 est une autre source de courant continu.

Le dispositif de charge 1 comprend également une interface de sortie 27 qui échange des informations et instructions avec une batterie de véhicule électrique 28 et peut alimenter celle-ci en courant électrique continu ou au contraire (en mode de redistribution) recevoir du courant électrique continu de celle-ci.

Le dispositif de charge 1 comporte en outre un premier module 23, un deuxième module 24 et un troisième module 26. Entre le deuxième module 24 et le troisième module 26 est prévu un transformateur 25.

Le premier module 23 constitue le premier étage du convertisseur (assurant la conversion courant d'entrée / courant intermédiaire) et l'ensemble formé du deuxième module 24, du transformateur 25 et du troisième module 26 constitue le deuxième étage du convertisseur (assurant la conversion courant intermédiaire / courant de sortie).

Le premier module 23 est connecté à l'interface d'entrée 22. Il comprend un ensemble d'inductances L1, L2, de diodes D1, D2, d'éléments de commutation Q1, Q2 et un condensateur C1. Ce premier module 23 est capable de convertir un courant alternatif d'entrée (issu de la source de courant 21) en courant continu de tension U1 aux bornes du condensateur C1 (courant intermédiaire). Ce premier module 23 réalise aussi une fonction de correction de facteur de puissance. Il est également susceptible de fonctionner en conversion DC-DC lorsque la source de courant 21 fournit un courant d'entrée continu.

Le deuxième module 24 est un hacheur en pont, comprenant des éléments de commutation Q3, Q4, Q5, Q6. Il convertit le courant continu de tension U1 en courant alternatif alimentant le transformateur 25. Il présente de préférence une structure résonnante ou quasi-résonnante.

Le transformateur 25 assure l'isolation galvanique, qui est imposée par les normes de sécurité pour toute charge à partir du réseau de distribution électrique.

Il fournit un courant alternatif en entrée du troisième module 26, qui est un redresseur, comprenant des éléments de commutation Q7, Q8, Q9, Q10 et un condensateur C2. Ce redresseur fournit un courant continu de tension U2 aux bornes du condensateur C2 et ainsi à l'interface de sortie 27 (courant de sortie).

Un système de contrôle 29 reçoit des informations et fournit des instructions à l'interface d'entrée 22, à l'interface de sortie 27 et au premier module 23, deuxième module 24 et troisième module 26.

Ce système de contrôle 29 est alimenté en énergie par des moyens d'alimentation auxiliaire 30 tels que décrits ci-dessus. Les moyens d'alimentation auxiliaire 30 peuvent être compris dans le dispositif de charge 1 ou être extérieurs à celui-ci, comme cela est représenté sur la figure.

Dans l'hypothèse où le dispositif de charge 1 n'est pas prévu pour être utilisé selon le deuxième mode de fonctionnement, il est possible d'utiliser une structure simplifiée assurant seulement une conversion DC-DC, et par exemple dépourvue de transformateur 25, si une isolation galvanique n'est pas requise pour des raisons de sécurité.

Une autre structure (simplifiée) possible pouvant être utilisée à la place de la structure décrite ci-dessus comporterait un module de conversion unique doté d'une commande complexe.

## Revendications

1. Dispositif de charge (1) adapté à être connecté d'une part à une batterie d'un premier véhicule électrique (14), et d'autre part à une batterie d'un deuxième véhicule électrique (12), à être alimenté en courant d'entrée continu par la batterie du premier véhicule électrique (14) et à alimenter la batterie du deuxième véhicule électrique (12) avec un courant de sortie continu, le dispositif de charge (1) comportant un système de contrôle (29) adapté à ajuster les paramètres de l'alimentation de la batterie du deuxième véhicule (12) et adapté à échanger des informations et instructions avec le premier véhicule (14) et/ou avec le deuxième véhicule (12), **caractérisé en ce que** le système de contrôle (29) est pourvu de moyens d'alimentation auxiliaire (30), comprenant un convertisseur auxiliaire adapté à recevoir un courant externe continu ou alternatif et à le convertir en courant continu d'alimentation du système de contrôle (29).

2. Dispositif de charge (1) selon la revendication 1, dans lequel le courant d'entrée et le courant de sortie sont différents, le dispositif de charge (1) étant adapté à convertir le courant d'entrée en courant de sortie.

3. Dispositif de charge (1) selon la revendication 1 ou 2, qui est intégré dans le premier véhicule électrique (14), ou qui est intégré dans le deuxième véhicule électrique (12) ; ou qui est un dispositif de charge amovible et portable.

4. Dispositif de charge (1) selon l'une des revendications 1 à 3, qui est également adapté à être connecté d'une part à une source de courant alternatif (11) et d'autre part à une batterie d'un véhicule électrique (12), à être alimenté par un courant d'entrée issu de la source de courant alternatif (11), à convertir le courant d'entrée en un courant de sortie continu, et à alimenter la batterie du véhicule électrique (12) avec ledit courant de sortie continu ; et dans lequel de préférence le dispositif de charge (1) comprend un premier étage (23) assurant la conversion du courant d'entrée en courant intermédiaire continu ainsi qu'un deuxième étage (24, 25, 26) assurant la conversion du courant intermédiaire en courant de sortie.

5. Dispositif de charge (1) selon l'une des revendications 1 à 4, dans lequel le système de contrôle (29) est adapté à ajuster les paramètres de la conversion du courant d'entrée en courant de sortie ; et adapté à échanger des informations et instructions le cas échéant avec la source de courant alternatif (11).

6. Dispositif selon l'une des revendications 1 à 5, dans lequel le véhicule électrique est une automobile électrique.

7. Dispositif selon l'une des revendications 1 à 6, dans lequel le convertisseur auxiliaire est adapté à recevoir un courant externe issu d'un réseau électrique de bord du premier véhicule ou d'un réseau électrique de bord du deuxième véhicule, et à le convertir en courant continu d'alimentation du système de contrôle (29).

8. Procédé de charge d'une batterie de véhicule électrique (12), comprenant :
- l'alimentation d'un dispositif de charge (1) par une source d'alimentation auxiliaire (30) qui est un courant externe continu ou alternatif ;
- la connexion du dispositif de charge (1) à une batterie d'un premier véhicule (14) et à une batterie d'un deuxième véhicule (12) ;
- l'alimentation du dispositif de charge (1) par un courant d'entrée continu issu de la batterie du premier véhicule (14) ;
- l'alimentation de la batterie du deuxième véhicule (12) par un courant de sortie issu du dispositif de charge (1).

9. Procédé selon la revendication 8, comprenant :
- la conversion du courant d'entrée en courant de sortie continu par le dispositif de charge (1).

10. Procédé selon la revendication 8 ou 9, dans lequel le dispositif de charge (1) est intégré dans le premier véhicule (14), et l'étape de connexion consiste à relier le dispositif de charge (1) au deuxième véhicule (12), de préférence au moyen d'un câble électrique ; ou dans lequel le dispositif de charge (1) est intégré dans le deuxième véhicule (12), et l'étape de connexion consiste à relier le dispositif de charge (1) au premier véhicule (14), de préférence au moyen d'un câble électrique.

11. Procédé selon l'une des revendications 8 à 10, dans lequel le dispositif de charge (1) est un dispositif amovible, et l'étape de connexion consiste à relier le dispositif de charge (1) au premier véhicule (14) et au deuxième véhicule (12).

12. Procédé selon l'une des revendications 8 à 11, dans lequel le courant de sortie présente une tension de 200 à 550 V ; et/ou dans lequel le courant de sortie présente une puissance inférieure ou égale à 20 kW, de préférence inférieure ou égale à 6 kW.

13. Procédé selon l'une des revendications 8 à 12, comportant l'ajustement de paramètres de l'alimentation de la batterie du deuxième véhicule (12) et l'échange d'informations et d'instructions entre le dispositif de charge (1) et le premier véhicule (14) et/ou le deuxième véhicule (12); le procédé comprenant de préférence l'envoi d'une instruction du dispositif de charge (1) au premier véhicule (14) pour déclencher l'alimentation du dispositif de charge (1) par la batterie du premier véhicule (14).

14. Procédé selon l'une des revendications 8 à 13, dans lequel le véhicule électrique est une automobile électrique.

15. Procédé selon l'une des revendications 8 à 14, dans lequel la source d'alimentation auxiliaire (30) est un réseau électrique de bord du premier véhicule ou un réseau électrique de bord du deuxième véhicule.

## Patentansprüche

1. Ladevorrichtung (1), die ausgelegt ist, um einerseits mit einer Batterie eines ersten elektrischen Fahrzeugs (14) und andererseits mit einer Batterie eines zweiten elektrischen Fahrzeugs (12) verbunden zu sein, um mit Eingangsgleichstrom durch die Batterie des ersten elektrischen Fahrzeugs (14) versorgt zu werden und die Batterie des zweiten elektrischen Fahrzeugs (12) mit einem Ausgangsgleichstrom zu versorgen, wobei die Ladevorrichtung (1) ein Steuersystem (29) umfasst, das ausgelegt ist, um die Parameter zur Versorgung der Batterie des zweiten Fahrzeugs (12) einzustellen, und ausgelegt ist, um Informationen und Anweisungen mit dem ersten Fahrzeug (14) und/oder mit dem zweiten Fahrzeug (12) auszutauschen, **dadurch gekennzeichnet, dass** das Steuersystem (29) mit Hilfsversorgungsmitteln (30) ausgestattet ist, umfassend einen Hilfswandler, der ausgelegt ist, um einen externen Gleich- oder Wechselstrom zu erhalten und ihn in Gleichstrom zur Versorgung des Steuersystems (29) umzuwandeln.

2. Ladevorrichtung (1) nach Anspruch 1, wobei der Eingangsstrom und der Ausgangsstrom verschieden sind, wobei die Ladevorrichtung (1) ausgelegt ist, um den Eingangsstrom in Ausgangsstrom umzuwandeln.

3. Ladevorrichtung (1) nach Anspruch 1 oder 2, die in das erste elektrische Fahrzeug (14) integriert ist oder die in das zweite elektrische Fahrzeug (12) integriert ist; oder wobei es sich um eine abnehmbare und tragbare Ladevorrichtung handelt.

4. Ladevorrichtung (1) nach einem der Ansprüche 1 bis 3, die auch ausgelegt ist, um einerseits mit einer Wechselstromquelle (11) und andererseits mit einer Batterie eines elektrischen Fahrzeugs (12) verbunden zu sein, um durch einen Eingangsstrom versorgt zu werden, der aus einer Wechselstromquelle (11) stammt, um den Eingangsstrom in einen Ausgangsgleichstrom umzuwandeln, und um die Batterie des elektrischen Fahrzeugs (12) mit dem Ausgangsgleichstrom zu versorgen; und wobei vorzugsweise die Ladevorrichtung (1) einen ersten Schritt (23) umfasst, der die Umwandlung des Eingangsstroms in Zwischengleichstrom sicherstellt, sowie einen zweiten Schritt (24, 25, 26), der die Umwandlung des Zwischenstroms in Ausgangsstrom sicherstellt.

5. Ladevorrichtung (1) nach einem der Ansprüche 1 bis 4, wobei das Steuersystem (29) ausgelegt ist, um die Parameter zur Umwandlung des Eingangsstroms in Ausgangsstrom einzustellen; und ausgelegt ist, um Informationen und Anweisungen gegebenenfalls mit der Wechselstromquelle (11) auszutauschen.

6. Vorrichtung nach einem der Ansprüche 1 bis 5, wobei das elektrische Fahrzeug ein elektrisches Kraftfahrzeug ist.

7. Vorrichtung nach einem der Ansprüche 1 bis 6, wobei der Hilfswandler ausgelegt ist, um einen externen Strom, der aus einem bordeigenen elektrischen Netz des ersten Fahrzeugs oder einem bordeigenen elektrischen Netz des zweiten Fahrzeugs stammt, zu erhalten und ihn in Gleichstrom zur Versorgung des Steuersystems (29) umzuwandeln.

8. Verfahren zum Laden einer Batterie eines elektrischen Fahrzeugs (12), umfassend:
- Versorgen einer Ladevorrichtung (1) durch eine Hilfsversorgungsquelle (30), wobei es sich um einen externen Gleich- oder Wechselstrom handelt;
- das Verbinden der Ladevorrichtung (1) mit einer Batterie eines ersten Fahrzeugs (14) und mit einer Batterie eines zweiten Fahrzeugs (12);
- das Versorgen der Ladevorrichtung (1) durch einen Eingangsgleichstrom, der aus der Batterie des ersten Fahrzeugs (14) stammt;
- das Versorgen der Batterie des zweiten Fahrzeugs (12) durch einen Ausgangsstrom, der aus der Ladevorrichtung (1) stammt.

9. Verfahren nach Anspruch 8, umfassend:
- die Umwandlung des Eingangsstroms in Ausgangsgleichstrom durch die Ladevorrichtung (1).

10. Verfahren nach Anspruch 8 oder 9, wobei die Ladevorrichtung (1) in das erste elektrische Fahrzeug (14) integriert ist und der Schritt des Verbindens darin besteht, die Ladevorrichtung (1) an das zweite Fahrzeug (12) anzuschließen, vorzugsweise mit Hilfe eines elektrischen Kabels; oder wobei die Ladevorrichtung (1) in das zweite Fahrzeug (12) integriert ist und der Schritt des Verbindens darin besteht, die Ladevorrichtung (1) an das erste Fahrzeug (14) anzuschließen, vorzugsweise mit Hilfe eines elektrischen Kabels.

11. Verfahren nach einem der Ansprüche 8 bis 10, wobei die Ladevorrichtung (1) eine abnehmbare Vorrichtung ist und der Schritt des Verbindens darin besteht, die Ladevorrichtung (1) an das erste Fahrzeug (14) an das zweite Fahrzeug (12) anzuschließen.

12. Verfahren nach einem der Ansprüche 8 bis 11, wobei der Ausgangsstrom eine Spannung von 200 bis 550 V darstellt; und/oder wobei der Ausgangsstrom eine Leistung von weniger als oder gleich wie 20 kW, vorzugsweise weniger als oder gleich wie 6 kW darstellt.

13. Verfahren nach einem der Ansprüche 8 bis 12, umfassend das Einstellen von Parametern zur Versorgung der Batterie des zweiten Fahrzeugs (12) und das Austauschen von Informationen und Anweisungen zwischen der Ladevorrichtung (1) und dem ersten Fahrzeug (14) und/oder dem zweiten Fahrzeug (12); wobei das Verfahren vorzugsweise das Senden einer Anweisung der Ladevorrichtung (1) an das erste Fahrzeug (14) umfasst, um die Versorgung der Ladevorrichtung (1) durch die Batterie des ersten Fahrzeugs (14) auszulösen.

14. Verfahren nach einem der Ansprüche 8 bis 13, wobei das elektrische Fahrzeug ein elektrisches Kraftfahrzeug ist.

15. Verfahren nach einem der Ansprüche 8 bis 14, wobei die Hilfsversorgungsquelle (30) ein bordeigenes elektrisches Netz des ersten Fahrzeugs oder ein bordeigenes elektrischen Netz des zweiten Fahrzeugs ist.

## Claims

1. A charging device (1) adapted for being connected on the one hand to a battery of a first electric vehicle (14), and on the other hand to a battery of a second electric vehicle (12), for being supplied with direct input current by the battery of the first electric vehicle (14), and for supplying the battery of the second electric vehicle (12) with a direct output current, the charging device (1) including a control system (29) adapted for adjusting the parameters of the power supply of the battery of the second vehicle (12) and adapted for exchanging information and instructions with the first vehicle (14) and/or with the second vehicle (12), **characterized in that** the control system (29) is provided with auxiliary power supply means (30), comprising an auxiliary converter adapted for receiving a direct or alternating external current and converting it into direct power supply current for the control system (29).

2. The charging device (1) according to claim 1, wherein the input current and the output current are different, the charging device (1) being adapted for converting the input current into output current.

3. The charging device (1) according to claim 1 or 2, which is integrated into the first electric vehicle (14), or which is integrated into the second electric vehicle (12); or which is a removable and portable charging device.

4. The charging device (1) according to one of claims 1 to 3, which is also adapted for being connected on the one hand to an alternating current source (11) and on the other hand to a battery of an electric vehicle (12), for being supplied with an input current from the alternating current source (11), for converting the input current into a direct output current, and for supplying the battery of the electric vehicle (12) with said direct output current; and wherein preferably the charging device (1) comprises a first stage (23) ensuring the conversion of the input current into a direct intermediate current as well as a second stage (24, 25, 26) ensuring the conversion of the intermediate current into an output current.

5. The charging device (1) according to one of claims 1 to 4, wherein the control system (29) is adapted for adjusting the parameters of the conversion of the input current into output current; and adapted for exchanging information and instructions if applicable with the alternating current source (11).

6. The device according to one of claims 1 to 5, wherein the electric vehicle is an electric automobile.

7. The device according to one of claims 1 to 6, wherein the auxiliary converter is adapted for receiving an external current from an onboard electric grid of the first vehicle or an onboard electric grid of the second vehicle, and converting it into a direct power supply current of the control system (29).

8. A method for charging a battery of an electric vehicle (12), comprising:
- supplying power to a charging device (1) via an auxiliary power supply source (30) that is a direct or alternating external current;
- connecting the charging device (1) to a battery of a first vehicle (14) and to a battery of a second vehicle (12);
- supplying the charging device (1) with a direct input current from the battery of the first vehicle (14);
- supplying the battery of the second vehicle (12) with an output current from the charging device (1).

9. The method according to claim 8, comprising:
- converting the input current into direct output current with the charging device (1).

10. The method according to claim 8 or 9, wherein the charging device (1) is integrated into the first vehicle (14), and the connection step consists of connecting the charging device (1) to the second vehicle (12), preferably by means of a power cable; or wherein the charging device (1) is integrated into the second vehicle (12), and the connection step consists of connecting the charging device (1) to the first vehicle (14), preferably by means of a power cable.

11. The method according to one of claims 8 to 10, wherein the charging device (1) is a removable device, and the connection step consists of connecting the charging device (1) to the first vehicle (14) and the second vehicle (12).

12. The method according to one of claims 8 to 11, wherein the output current has a voltage of 200 to 550 V; and/or wherein the output current has a power less than or equal to 20 kW, preferably less than or equal to 6 kW.

13. The method according to one of claims 8 to 12, comprising adjusting parameters for the supply of power to the battery of the second vehicle (12) and exchanging information and instructions between the charging device (1) and the first vehicle (14) and/or the second vehicle (12); the method preferably comprising sending an instruction from the charging device (1) to the first vehicle (14) to trigger the supply of power of the charging device (1) from the battery of the first vehicle (14).

14. The method according to one of claims 8 to 13, wherein the electric vehicle is an electric automobile.

15. The method according to any one of claims 8 to 14, wherein the auxiliary power supply source (30) is an onboard electric grid of the first vehicle or an onboard electric grid of the second vehicle.
